# FASCICULE DE BREVET EUROPEEN

(11) **EP 4 491 904 B1**
(45) Date de publication et mention de la délivrance du brevet: **20.05.2026**
(21) Numéro de dépôt: 24213131.6
(22) Date de dépôt: 20.10.2022
(51) Int. Cl.: F16H 3/00, F16H 3/54

(54) **MODULE DE TRANSMISSION DE PUISSANCE MÉCANIQUE**
MECHANISCHES LEISTUNGSÜBERTRAGUNGSMODUL
MECHANICAL POWER TRANSMISSION MODULE

(30) Priorité: 21.10.2021 FR 2111181
(43) Date de publication de la demande: 15.01.2025
(62) Demande divisionnaire de: 22813648.7
(73) Titulaire: Bernard Controls, 95500 Gonesse (FR)
(72) Inventeur: DAJIC, Ivan, 60310 AMY (FR)
(74) Mandataire: Weinstein Services & Conseils

(56) Documents cités:
- CN-A- 111 733 906
- CN-U- 213 628 720
- FR-A1- 3 065 266

## Description

L'invention porte sur un module de transmission de puissance mécanique, utilisable notamment pour la manipulation manuelle d'une vanne industrielle, dans le cadre d'une intervention d'un opérateur sur un actionneur asservi électrique, aussi appelé servomoteur électrique. Un tel servomoteur peut être monté sur une vanne d'installation complexe comme une vanne dans le secteur de l'énergie, notamment dans les centrales nucléaires, ou dans le secteur de l'eau, dans celui de l'industrie comme les cimenteries, ou encore dans le secteur des industries pétrolières et gazières.

L'invention s'applique à des servomoteurs multi-tours, ou quart de tour ou plus généralement fraction de tour et à d'autres types d'actionneurs électriques. Le module de transmission de puissance peut être utilisé dans différents contextes.

On précise que si les vannes industrielles, qui sont placées sur des conduites de fluide, liquide ou gaz, sont couramment contrôlées par un servomoteur asservissant leur position à une commande électronique de position, il est nécessaire de pouvoir, avec le même dispositif, les manœuvrer à la main, lors d'une part de la mise en place et de la mise en service de l'actionneur électrique, mais également à chaque fois qu'une intervention humaine est nécessaire, et cela peut être de manière programmée, ou à l'inverse de manière urgente en cas de difficulté sur le site industriel nécessitant une intervention manuelle, comme, par exemple, la perte de l'alimentation en électricité. La mise en place d'une commande manuelle n'est néanmoins pas une chose aisée, car les efforts à fournir sont en général élevés, et il est donc nécessaire de prévoir des systèmes de démultiplication. On sait aussi que la course de l'actionneur peut être longue, ce qui est un problème, car cela rallonge le temps d'intervention si la démultiplication est présente sur toute la course.

Dans ce contexte, on connait du document FR3072746_A1 un procédé de commande manuelle d'une vanne à l'aide d'un volant utilisant une transmission de puissance par des engrenages situés dans un carter. Dans une configuration permettant une réduction de vitesse, pour surmonter une réduction importante en fin de course de fermeture de vanne par exemple, les engrenages forment un train épicycloïdal disposant d'une couronne qui est encastrée au carter, et dans une autre configuration les engrenages assurent une transmission sans réduction de vitesse entre l'entrée et la sortie du carter, ce qui est appréciable en début de course, quand la vanne n'oppose pas de résistance particulière. Le passage de la conformation de réduction à l'autre configuration est mené par le déplacement axial d'une tige parallèle à l'axe et déportée par rapport à celui-ci et qui en fonction de sa position, dégage la couronne du carter et l'immobilise vis à vis du porte-satellites. Cette configuration est atteinte en tirant la tige hors du carter. Alternativement le passage d'une conformation à l'autre peut se faire par le déplacement axial de la couronne aux mêmes fins, éventuellement obtenu par un déplacement axial du volant d'entrée et de son axe. Là aussi, le couplage direct de l'entrée avec la sortie est obtenu en tirant l'axe, cette fois-ci l'axe du volant, vers l'extérieur du carter.

On connait aussi, par un autre document, portant le numéro WO2009027821_A1, un mécanisme de transmission de puissance comprenant un carter dans lequel des engrenages sont placés. Dans une configuration, les engrenages forment un train épicycloïdal disposant d'un porte-satellites qui est encastré au carter, et dans une autre configuration offrant un rapport de vitesses différent, le porte-satellites est encastré à la couronne du train épicycloïdal et libre par rapport au carter. Le passage de l'une à l'autre des conformations est mené soit par le déplacement axial du porte-satellites, soit par le déplacement d'un anneau entourant le porte-satellites et lié en rotation avec lui.

Un autre mécanisme est divulgué par le même document WO2009027821_A1 : Dans une configuration de cet autre mécanisme, les engrenages forment un train épicycloïdal disposant d'un porte-satellites qui est encastré au carter, et dans une autre configuration le pignon planétaire soleil est encastré à la couronne du train épicycloïdal et libre par rapport aux satellites. Le passage de l'une à l'autre des conformations est mené par déplacement axial du soleil. Dans ces différentes mises en œuvre, une manœuvre est effectuée par action sur un élément de commande mécanique accessible soit sur la face frontale du carter par laquelle la puissance est introduite soit sur sa paroi latérale.

On connait également du document CN213628720U un module de transmission de puissance mécanique comprenant un carter et une pluralité de pièces mécaniques montées coaxialement et formant un train épicycloïdal dont une des entrées/sorties est immobilisée vis-à-vis du carter, les deux autres entrées/sorties du train épicycloïdal étant formées par un assemblage d'entrée et un assemblage de sortie. Enfin on connait le document CN111733906A qui divulgue un bras d'excavatrice avec transmission hydraulique. Ce document divulgue une boîte de vitesses, comprenant une fourchette de boîte de vitesses, actionnée électriquement via une tige articulée.

Ces différentes solutions restent compliquées à utiliser pour certains opérateurs qui ne connaissent pas le fonctionnement interne des appareils proposés.

On est ainsi dans le besoin d'une solution qui soit intuitive pour l'opérateur, qui s'intéresse en premier lieu au maniement du volant et n'a pas forcément à l'esprit la nécessité de procéder à des modifications de la chaîne de transmission interne au système.

L'invention vise à résoudre ce problème en proposant un module de transmission de puissance mécanique comprenant un carter et une pluralité de pièces mécaniques montées coaxialement, ladite pluralité de pièces mécaniques formant un train épicycloïdal dont une des entrées/sorties est immobilisée vis-à-vis du carter, les deux autres entrées/sorties du train épicycloïdal étant formées par un assemblage d'entrée et un assemblage de sortie, la puissance étant de plus amenée à la pluralité de pièces mécaniques par un arbre d'entrée du module de transmission coaxial avec les pièces de la pluralité de pièces mécaniques, l'arbre d'entrée étant couplé avec l'assemblage de sortie par l'intermédiaire de l'assemblage d'entrée dans une première position axiale de l'arbre d'entrée vis-à-vis du carter définissant un premier rapport de vitesses du module de transmission.

Ainsi, on a un train épicycloïdal qui permet de mettre en place une démultiplication. Néanmoins le module de transmission de puissance est particulier en ce que l'assemblage d'entrée comporte un alésage traversant central, ledit alésage traversant et l'arbre d'entrée portant des cannelures complémentaires pour le couplage de l'arbre d'entrée avec l'assemblage d'entrée, l'arbre d'entrée, monté glissant vis-à-vis du carter, glissant de plus dans l'alésage traversant pour se coupler avec l'assemblage de sortie dans une deuxième position de l'arbre d'entrée vis-à-vis du carter, différant de la première position par une translation axiale, dans laquelle lesdites cannelures complémentaires ne sont plus engagées, et qui définit un deuxième rapport de vitesses du module de transmission.

Grâce à cette solution, il est possible de changer le rapport de réduction ou de démultiplication entre l'arbre d'entrée et l'assemblage de sortie par déplacement axial de l'arbre d'entrée puisque dans une position la puissance passe par le train épicycloïdal, alors qu'elle le contourne dans la deuxième position : en effet dans cette deuxième position, l'arbre d'entrée est directement couplé avec l'assemblage de sortie. Ce résultat remarquable est obtenu par la présence d'un alésage cannelé dans l'ensemble d'entrée, grâce au caractère glissant de l'arbre d'entrée et grâce aux moyens de couplage permettant de coupler l'arbre d'entrée à l'assemblage de sortie, tout en désengageant l'arbre d'entrée de l'ensemble d'entrée.

Des moyens de couplage de l'assemblage de sortie avec l'arbre d'entrée peuvent comprendre des cannelures portées par un alésage central de l'assemblage de sortie ouvert vers l'alésage traversant et des cannelures portées par l'arbre d'entrée. Cela est une solution facile à mettre en œuvre parallèlement aux cannelures existant entre l'arbre d'entrée et l'ensemble d'entrée. Les cannelures de l'arbre d'entrée engageant l'ensemble d'entrée et celle engageant l'ensemble de sortie peuvent être différentes ou peuvent être les mêmes. Dans le mode de réalisation qui sera présenté aux dessins, elles sont différentes, séparées par une section lisse de l'arbre d'entrée.

L'arbre d'entrée dans la première position peut être plus enfoncé dans le carter que dans la deuxième position. Cela permet à l'opérateur d'engager la démultiplication en poussant le volant, et d'engager le couplage direct en le retirant, ce qui est un mouvement facile et intuitif.

Ledit assemblage d'entrée peut constituer le porte-satellites du train épicycloïdal muni de ses satellites, couplé sans réduction à l'arbre d'entrée dans la première position, l'alésage traversant étant un alésage du porte-satellites. C'est une version simple et compacte de l'invention.

L'assemblage de sortie comprend un pignon alésé couplé à l'assemblage d'entrée par une denture extérieure et un entraineur central, montés l'un par rapport à l'autre en liaison glissière axiale, l'entraineur comportant des moyens d'appui pour subir une poussée axiale dans un sens par une tige de commande et pour subir une poussée axiale par l'arbre d'entrée dans l'autre sens et des cannelures pour, sous l'effet des poussées axiales, le couplage et le découplage vis-à-vis d'une sortie du module de transmission. Cela permet d'avoir une action sur le module de commande en provenance de la partie opposée au volant, à l'autre extrémité de la vis sans fin, c'est-à-dire du côté du moteur électrique. En particulier, cela permet de mettre en place une position neutre, par laquelle la tige de commande pousse l'entraineur qui se désengage de l'arbre de sortie. Une poussée sur l'arbre d'entrée permet de réengager l'entraineur sur l'arbre de sortie.

En d'autres termes, la caractéristique visée permet d'introduire un mouvement supplémentaire, axial, pour commander un actionneur mécanique en translation sur l'axe, à l'aide d'un appui effectué par une face pleine. Un actionneur mécanique en translation peut être relié à un autre module de transmission de puissance, par exemple un moteur électrique, couplé à un même récepteur, par exemple une vis sans fin, que l'assemblage de sortie du module de transmission de puissance.

Un ressort est placé entre l'entraineur et le pignon alésé en sorte de s'opposer au glissement de l'entraineur vis à vis du pignon alésé quand l'arbre d'entrée se déplace vis-à-vis de l'assemblage de sortie. C'est une manière simple de s'assurer du bon déplacement des pièces à l'intérieur du mécanisme entre les différentes positions : d'une part on peut avoir un neutre, mais on peut aussi avoir deux rapports de vitesses différents.

Un ressort à lame du module de transmission peut être présent entre l'assemblage d'entrée et un palier reliant l'arbre d'entrée et le carter, retient l'arbre malgré le poids de celui-ci, et coopère avec une forme portée par l'arbre d'entrée pour signaler à un opérateur déplaçant axialement l'arbre d'entrée qu'il a atteint la première ou la deuxième position. Un tel ressort peut servir à maintenir l'arbre en position stable bien qu'il soit disposé verticalement, ce qui est une solution offerte à l'industriel qui utilise le module de transmission de puissance et le servomoteur associé. Si l'arbre est vertical, la gravité l'entraine vers le bas et il est nécessaire de le maintenir, ce que le ressort à lame proposé peut faire.

L'assemblage d'entrée peut être le porte-satellites du train épicycloïdal, et l'assemblage de sortie est le pignon solaire du train épicycloïdal. Il s'agit d'une disposition bien caractérisée de train épicycloïdal, mais d'autres dispositions d'entrée/sortie sont possibles. L'assemblage d'entrée peut être couplé sans réduction sur l'arbre d'entrée dans la première position. Cela est une solution simple de mise en œuvre. L'assemblage de sortie peut être couplé sans réduction sur un arbre de sortie du module de transmission. Cela est aussi une solution simple de mise en œuvre.

L'invention concerne aussi une utilisation d'un module de transmission de puissance mécanique tel que présenté ci-dessus et ci-après, pour la mise en service initiale d'un servomoteur électrique sur une vanne ou vantelle de contrôle d'un fluide circulant dans une canalisation, ou pour une manœuvre de sécurité sur ladite vanne, la vanne ou vantelle étant manœuvrée par l'intermédiaire d'un arbre de transmission portant une roue, l'arbre d'entrée étant couplé à un volant constituant une commande manuelle, l'assemblage de sortie étant couplé à une vis sans fin qui engraine la roue.

L'invention sera présentée plus en détails en lien avec les figures suivantes.
La figure 1 montre une vue générale d'un ensemble servomoteur selon l'invention, vu en coupe longitudinale.
La figure 2 montre un mode de réalisation d'un module de transmission de puissance selon l'invention, en position neutre, aucun rapport de vitesses n'étant engagé.
La figure 3 montre le dispositif de la figure 1, dans une configuration d'engagement d'un rapport de vitesses d'un facteur 3:1.
La figure 4 montre le dispositif de la figure 1, dans une configuration d'engagement d'une transmission directe de la puissance, sans démultiplication.
La figure 5 montre un aspect d'un module de transmission de puissance selon les figures 2 à 4, en l'occurrence un mécanisme d'aide au maniement.
Les figures 6 et 7 montrent le mécanisme d'aide au maniement dans deux positions distinctes.
Les figures 8 à 10 montrent un deuxième mode de réalisation.

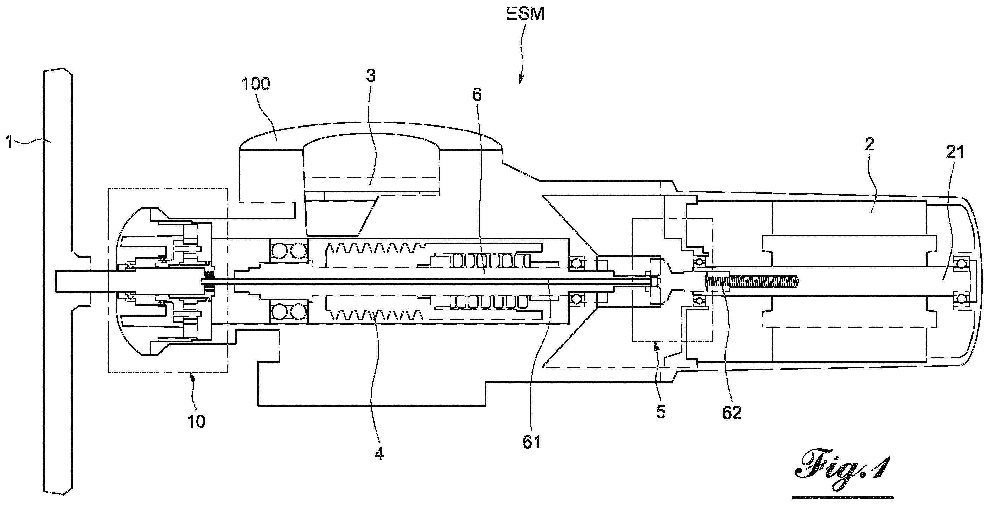

[Fig. 1] En figure 1 on a représenté une vue générale d'un ensemble servomoteur ESM selon l'invention. L'ensemble servomoteur comprend un volant 1, un moteur électrique 2, un ensemble vis sans fin et roue associée, duquel on voit la roue 3 et la vis sans fin 4, ainsi qu'un système de débrayage 5 et un système mécanique dit actionneur traversant 6. La roue 3 est dimensionnée pour être mise en place sur l'arbre d'une vanne ou ventelle industrielle (non représenté). En fonction de l'orientation de l'arbre de la vanne ou ventelle, l'orientation de l'ensemble servomoteur ESM, vu par l'axe commun au moteur électrique 2 et au volant 1 ainsi qu'à la vis sans fin 4 peut être soit horizontale soit verticale.

Le volant 1 et le moteur électrique 2 sont placés coaxialement avec la vis sans fin 4 et couplés ou couplables avec respectivement l'une et l'autre de ses deux extrémités. Le système de débrayage 5 est en mesure de découpler le moteur électrique 2 de la première extrémité (à droite sur la figure) de la vis sans fin ou de les coupler et le module de transmission de puissance 10 est en mesure d'effectuer au moins un changement de rapport de vitesses entre le volant 1 et la vis sans fin 4 ou alors de découpler ces deux éléments, et de manière réversible les recoupler, du côté de la deuxième extrémité (à gauche sur la figure).

L'actionneur traversant 6 est un système purement mécanique, dans le mode de réalisation présenté, configuré pour transmettre un changement de configuration depuis le système de débrayage 5 vers le module de transmission de puissance 10 ou inversement du module de transmission de puissance 10 au système de débrayage 5. L'actionneur traversant 6 ne transmet pas de puissance mécanique, mais il permet le basculement d'une configuration du système de débrayage 5 vers une autre ou d'une configuration du module de transmission de puissance 10 vers une autre, respectivement sous la commande d'un signal venant de l'autre extrémité de la vis sans fin 4. L'actionneur traversant 6 est notamment construit sur la base d'une tige traversante 61 introduite dans un alésage traversant de la vis sans fin 4. La tige traversante 61 débouche aux deux extrémités de la vis sans fin 4 et elle transmet, par sa translation axiale (c'est à dire longitudinale) vers ou la gauche ou sa translation vers la droite, une commande qui provoque une commutation à l'autre extrémité de la vis sans fin 4.

On précise maintenant le basculement opéré par l'actionneur traversant 6.

Quand le moteur électrique 2, initialement à l'arrêt et découplé de la vis sans fin 4 entre en mouvement sous l'action d'une commande du moteur, souvent reçu par un moyen de communication à distance, le moteur électrique 2 est couplé à la vis sans fin 4 par le système de débrayage 5 et un ressort de connexion du moteur 62, et il pousse l'actionneur traversant 6 vers le module de transmission de puissance 10, et provoque, par l'intermédiaire de l'actionneur traversant 6 le découplage du volant 1 de la vis sans fin 4.

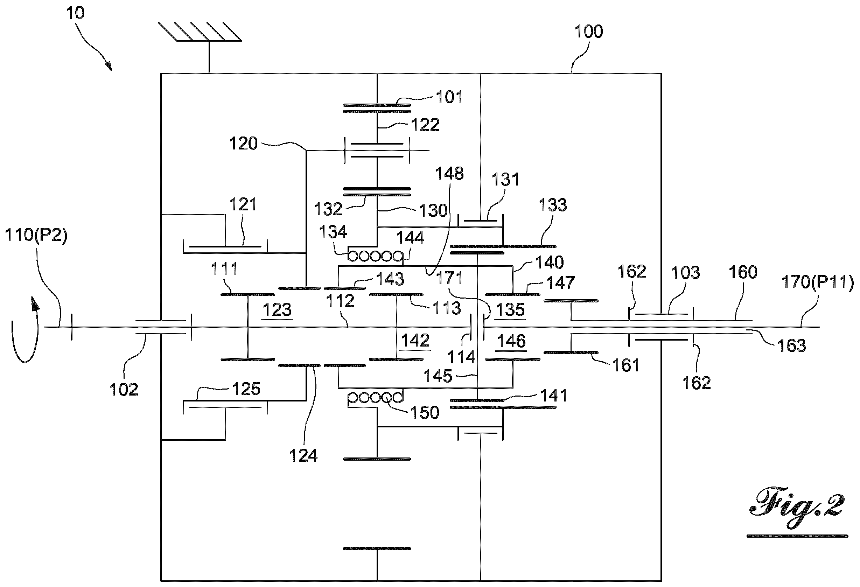

A l'inverse, quand le volant 1 est poussé par un opérateur pour enfoncer son axe dans le carter du module de transmission de puissance 10, le moteur électrique 2 est découplé de la vis sans fin 4 par le système de débrayage 5 car celui-ci est ouvert par l'actionneur traversant 6, dont le déplacement est causé par celui de l'axe du volant 1. Simultanément, la vis sans fin 4 est couplée au volant par l'intermédiaire du module de transmission de puissance 10, comme cela va être détaillé en relation avec les figures suivantes, notamment la transition de la figure 2 à la figure 3.

[Fig. 2] En figure 2 on a représenté un mode de réalisation d'un module de transmission de puissance 10 selon l'invention.

Le module de transmission de puissance 10 comprend dans un carter 100, un porte-satellites 120, un pignon alésé 130, une pièce de révolution constituant extérieurement une section d'arbre et comprenant deux alésages intérieurs (ces éléments seront décrits plus loin) qualifiée d'entraineur 140, un ressort de compression 150 et un ressort à lame dit ressort à lame de sélection de position 180.

Le module de transmission de puissance 10, en fonction de son état de configuration, peut recevoir de la puissance mécanique en entrée sur un arbre d'entrée 110, en l'occurrence l'arbre d'un volant (le volant 1 de la figure 1), et fournir de la puissance sur un arbre de sortie 160, en l'occurrence une vis sans fin. Ces deux arbres sont coaxiaux. Sur la figure 2 ils sont découplés ce qui a pour conséquence que la rotation de l'arbre d'entrée 110 qui reçoit de la puissance n'est pas transmise à l'arbre de sortie 160 qui est immobile.

Par ailleurs, une tige de commande 170, ou tringle, profite du fait que l'arbre de sortie est creux pour être introduite à l'intérieur du mécanisme présenté, par l'intérieur de l'arbre de sortie 160. Cette tige de commande 170 est l'extrémité de l'actionneur traversant 6 présenté en figure 1.

Le carter 100 comprend sur sa face intérieure une couronne dentée 101, dentée vers l'intérieur, dont le rôle sera commenté ci-après, une liaison pivot d'entrée 102 (en l'occurrence un pivot glissant) pour accueillir l'arbre d'entrée 110 et une liaison pivot de sortie 103 (en l'occurrence un pivot non glissant) pour maintenir axialement l'arbre de sortie 160.

La couronne dentée 101 et les deux liaisons pivots 102 et 103 d'entrée et de sortie sont coaxiales.

L'arbre d'entrée 110 est en liaison pivot glissant avec le carter 100, la translation étant limitée par des butées.

La portion de l'arbre d'entrée 110 à l'intérieur du carter 100 présente successivement, dans l'ordre depuis la liaison pivot d'entrée 102 vers l'intérieur du carter 100, des premières cannelures dites premières cannelures de l'arbre d'entrée 111 (sur une section cylindrique), une portion d'arbre non cannelée 112 (une autre section cylindrique) et des deuxièmes cannelures dites deuxièmes cannelures de l'arbre d'entrée 113 (sur une troisième section cylindrique), puis son extrémité dite extrémité de l'arbre d'entrée 114.

Le porte-satellites 120 est monté vis-à-vis du carter 100 à l'aide d'un palier 121 coaxial avec les liaisons pivots d'entrée 102 et de sortie 103 ainsi qu'avec la couronne dentée 101.

Le porte-satellites 120 comprend un ou plusieurs satellites 122 qui engrainent tous sur la couronne dentée 101. Ils ont des axes de rotation parallèles à l'axe de rotation du porte-satellites 120.

Le porte-satellites 120 comporte un alésage traversant 123 coaxial avec les liaisons pivots d'entrée 102 et de sortie 103 ainsi qu'avec la couronne dentée 101 et dimensionné pour accueillir en son intérieur l'arbre d'entrée 110. L'alésage traversant 123 comporte une section cylindrique cannelée dite portion cannelée du porte-satellites 124 et une section cylindrique non cannelée, lisse, dite portion non cannelée de l'alésage du porte-satellites 125, qui est plus proche de la liaison pivot d'entrée 102 et du volant que la portion cannelée du porte-satellites 124.

Le module de transmission de puissance 10 comprend également un pignon alésé 130 monté avec une liaison pivot 131 (non glissant) vis-à-vis du carter 100 coaxialement avec l'arbre d'entrée 110 et l'arbre de sortie 160 ainsi qu'avec le porte-satellites 120. Ce pignon alésé 130 forme tout ou partie du pignon solaire d'un train épicycloïdal fondé sur le porte-satellites 120 et dont la couronne dentée 101 constitue l'autre pignon planétaire. Le pignon alésé 130 comprend une denture d'engrenage externe dite denture du pignon alésé 132 qui engraine ainsi avec le ou les satellites 122.

Ainsi les satellites engrainent tous avec le pignon alésé 130, de leur côté qui fait face à l'axe du module de transmission de puissance 10, c'est-à-dire à l'opposé, radialement, de la couronne dentée 101.

Le pignon alésé 130 comprend un alésage traversant coaxial avec l'arbre d'entrée 110 et l'alésage traversant 123 du porte-satellites 120, cet alésage du pignon alésé étant dit alésage de réception de l'entraineur 135.

Le pignon alésé 130 porte sur la surface de cet alésage de réception de l'entraineur 135 des cannelures dite cannelures glissantes de couplage à l'entraineur 133, qui ont une longueur axiale importante, pour permettre le glissement de cannelures plus courtes, qui seront présentées plus loin.

L'entraineur 140 est une pièce cylindrique de révolution creuse disposée coaxialement avec l'arbre d'entrée 110 et l'alésage traversant 123 du porte-satellites 120. Il porte des cannelures sur sa surface externe, dites cannelures externes de l'entraineur 141.

Les cannelures glissantes de couplage à l'entraineur 133 du pignon alésé 130 sont engagées avec les cannelures externes de l'entraineur 141. Mais les cannelures glissantes de couplage à l'entraineur 133 du pignon alésé 130 ont une longueur supérieure, qui peut être double, plus que double ou moins que double, aux cannelures externes de l'entraineur 141, et celles-ci interagissent avec la partie des cannelures glissantes de couplage à l'entraineur 133 qui se situe du côté de la liaison pivot d'entrée 102.

L'entraineur 140 est aussi une pièce cylindrique de révolution creuse. Néanmoins, elle n'est pas creuse de bout en bout, et comprend une paroi 145 transversale à l'axe du module de transmission de puissance 10.

La paroi 145 constitue, du côté de la liaison pivot d'entrée 102, un fond pour l'alésage de l'entraineur débouchant du côté de la liaison pivot d'entrée 102 dit alésage de couplage direct au volant 142 et une butée pour l'arbre d'entrée 110 quand celui-ci est introduit dans l'entraineur 140.

L'alésage d'entrée de l'entraineur ou alésage de couplage direct au volant 142 porte sur sa surface des cannelures dit cannelures de couplage direct 143, pour coupler l'entraineur avec l'arbre d'entrée 110. Ces cannelures définissent une section cylindrique de l'alésage, à laquelle succède, vers le fond de l'alésage, à l'opposé de la liaison pivot d'entrée 102 une section cylindrique lisse, sans cannelures, dite portion non cannelée de l'alésage de couplage direct 148.

De l'autre côté de la paroi 145, l'entraineur 140 comprend des cannelures dirigées vers l'axe dans son alésage débouchant du côté de la liaison pivot de sortie 103. Cet alésage est dit alésage de couplage à la vis sans fin 146 et les cannelures sont dites cannelures de sortie de l'entraineur 147.

Enfin, sur sa périphérie, l'entraineur 140 comporte de plus une surface périphérique annulaire pour appui latéral 144, dans un plan perpendiculaire à l'axe , pour l'appui latéral d'un ressort, et faisant face au côté du carter sur lequel se situe l'arbre d'entrée 110.

Faisant face à cette surface périphérique annulaire pour appui latéral 144, le pignon alésé 130 comporte quant à lui une surface annulaire pour appui latéral 134, dans un plan perpendiculaire à l'axe, pour l'appui latéral d'un ressort, et faisant face au côté du carter sur lequel se situe l'arbre de sortie 160.

Le ressort de compression 150 est mis en place entre la surface annulaire pour appui latéral 134 du pignon alésé 130 et la surface d'appui latéral 144 de l'entraineur 140, qui se font face.

L'arbre de sortie 160 comprend des cannelures externes dites cannelures de l'arbre de sortie 161 dirigées vers l'extérieur de l'arbre, et il est bloqué en translation axiale par des butées de translation 162 intégrées dans le carter 100. L'arbre de sortie 160 est de plus un arbre creux comprenant un alésage dit alésage de l'arbre de sortie 163.

Une tige de commande 170 est insérée dans l'alésage de l'arbre de sortie 163, et l'extrémité de la tige de commande 171 vient au contact de la paroi 145 de l'entraineur, dans une position dite première position de la tige de commande P11, enfoncée dans le carter 100.

En figure 2 l'arbre d'entrée 110 n'est couplé à aucun des éléments contenus dans le carter 100, ce qui a pour conséquence que s'il est entrainé en rotation, sa rotation est libre et n'affecte pas le porte-satellites 120, le pignon alésé 130, l'entraineur 140 et l'arbre de sortie 160. Cet absence de couplage est due au fait que dans sa position P2 représentée en figure 2, l'arbre d'entrée 110 a ses premières cannelures 111 qui font face à la portion non cannelée de l'alésage du porte-satellites 125 et ses deuxièmes cannelures 113 qui font face à la portion non cannelée de l'alésage de couplage direct 148. La portion cannelée du porte-satellites 124 et les cannelures de couplage direct 143 font quant à elles face à la portion non cannelée 112 de l'arbre d'entrée. La longueur de cette portion non cannelée a été choisie pour assurer l'absence de couplage dans la position P2.

Telle que représentée en figure 2, dans cette position neutre, d'une part, la tige de commande 170 est rentrée dans le carter 100 (il s'agit de la première position de la tige de commande P11), et l'extrémité de la tige de commande 171 a déplacé l'entraineur 140 vers la gauche, ce qui a eu pour conséquence de désengager les cannelures de sortie de l'entraineur 147 des cannelures de l'arbre de sortie 161.

D'autre part, les premières cannelures de l'arbre d'entrée 111 sont du côté de la liaison pivot d'entrée 102 par rapport à la portion cannelée du porte-satellites 124 et ne sont pas engagées avec elle. Enfin les deuxièmes cannelures de l'arbre d'entrée 113 sont du côté de la liaison pivot de sortie 103 par rapport aux cannelures de couplage direct 143, sans interagir avec celles-ci. C'est par contre la portion d'arbre non cannelée 112 qui fait face à son droit à la fois à la portion cannelée du porte-satellites 124 et aux cannelures de couplage direct 143.

Ces positionnements relatifs des cannelures garantissent la rotation libre de l'arbre d'entrée 110 : il n'est lié ni au porte-satellites 120, ni à l'entraineur 140.

Il y a aussi libre rotation de la vis sans fin, c'est-à-dire l'arbre de sortie 160, puisqu'il n'est pas relié à l'entraineur 140.

Dans la configuration de la figure 2, le ressort de compression 150 est comprimé, et il est prêt à aider à un déplacement axial relatif de l'entraineur 140 vis-à-vis du pignon alésé 130.

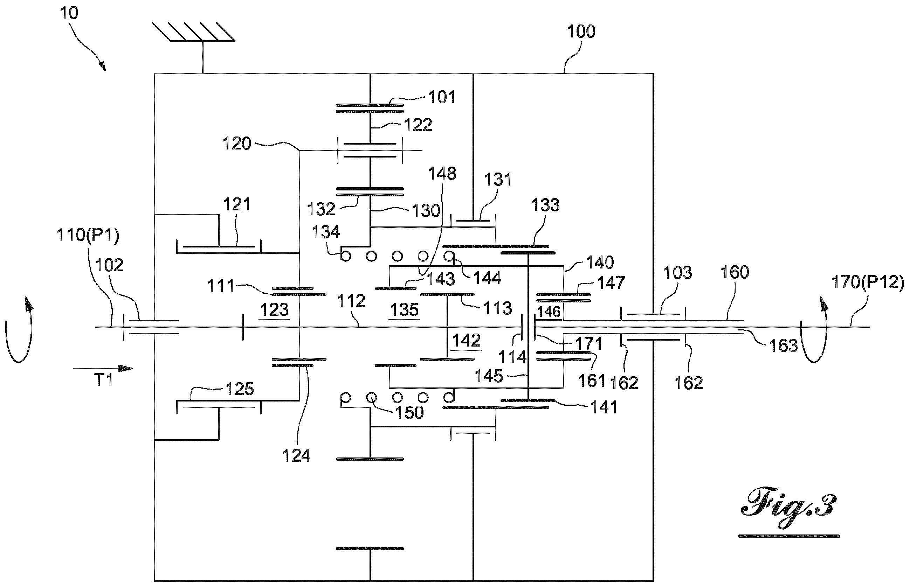

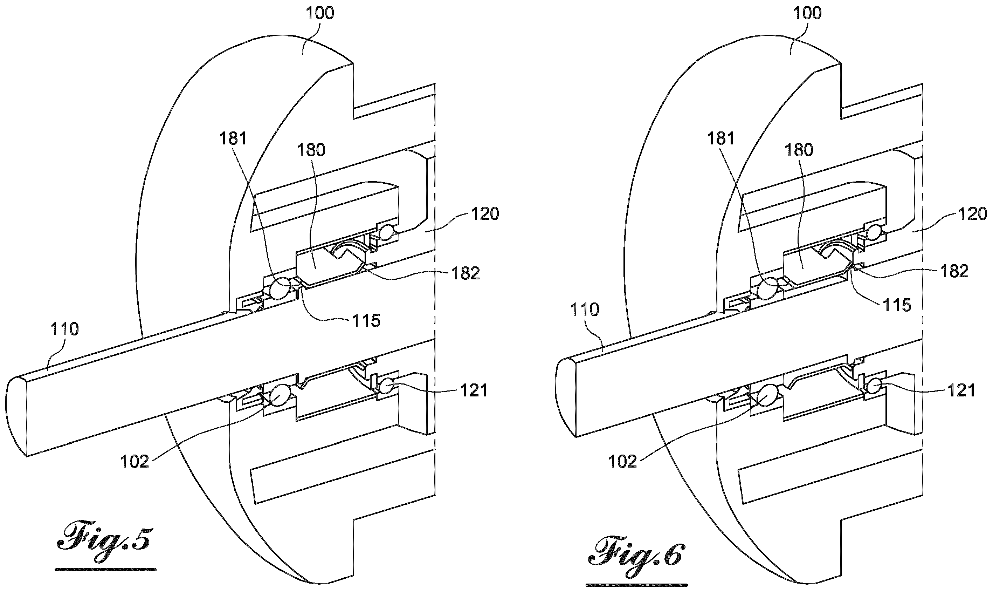

[Fig. 3] La figure 3 montre le résultat de la translation T1 (notée première translation) de l'arbre d'entrée 110 vers l'intérieur du carter 100 grâce à la liaison d'entrée 102 dont il a été dit qu'il s'agit d'une liaison pivot glissant. L'arbre d'entrée 110 est amené en butée vers l'intérieur, dans le cadre de la liaison 102. La butée est assurée par le carter 100 ou tout autre élément en liaison avec le carter, comme on le verra en figures 5 à 7.

Cette translation est aidée par le ressort de compression 150, qui se détend et pousse l'entraineur 140 vers la partie du mécanisme opposée à la liaison d'entrée 102. À l'issue de cette translation, l'arbre d'entrée 110 est dans une position qualifiée de première position de l'arbre d'entrée P1 : l'arbre d'entrée 110 est enfoncé dans le carter 100. L'entraineur 140 s'est aussi déplacé vers la liaison de sortie 103, et il a poussé vers l'extérieur du carter la tige de commande 170.

Dans cette situation représentée à la figure 3, les premières cannelures de l'arbre d'entrée 111 sont en prise avec la portion cannelée du porte-satellites 124, car l'arbre d'entrée 110 a progressé dans le carter, alors que le porte-satellites 120 n'a pas bougé.

Les deuxièmes cannelures de l'arbre d'entrée 113 n'interagissent pas par contre avec les cannelures de couplage direct 143, car celles-ci font toujours face à la portion non cannelé 112, de l'arbre d'entrée 110. Plus précisément les deuxièmes cannelures de l'arbre d'entrée 113 et les cannelures de couplage direct 143 ont suivi le même mouvement vers la droite du mécanisme, et comme en figure 2, ne sont pas en contact.

L'arbre d'entrée 110 entraine donc en rotation le porte-satellites 120, qui par les satellites 122 entraine en rotation le pignon alésé 130.

S'agissant du pignon alésé 130, les cannelures glissantes de couplage à l'entraineur 133 sont toujours engagées avec les cannelures externes de l'entraineur 141. Comme on l'a vu, les cannelures glissantes de couplage à l'entraineur 133 du pignon alésé 130 ont une longueur supérieure aux cannelures externes de l'entraineur 141, et celles-ci interagissent cette fois-ci avec la partie des cannelures glissantes de couplage à l'entraineur 133 qui se situe du côté de la liaison pivot de sortie 103, car du fait de la progression de l'arbre d'entrée 110 dans le carter 100 et dans l'alésage de couplage direct au volant 142, l'extrémité de l'arbre d'entrée 114 a poussé la paroi 145 et l'entraineur 140 s'est déplacé vers la liaison pivot de sortie 103.

Le pignon alésé 130 entraine donc en rotation l'entraineur 140, du fait du maintien de l'engagement des cannelures qui viennent d'être mentionnées.

Comme mentionné, l'extrémité de l'arbre d'entrée 114 a poussé l'entraineur 140, par appui sur la paroi 145, vers la liaison pivot de sortie 103 et du fait de ce déplacement, les cannelures de sortie de l'entraineur 147 et les cannelures de l'arbre de sortie 161 sont en interaction les unes avec les autres et une rotation de l'entraineur 140 entraine nécessairement une rotation de l'arbre de sortie 160, c'est-à-dire la vis sans fin.

L'entraineur 140 entraine donc quant à lui en rotation l'arbre de sortie 160.

Et de plus, l'entraineur 140, parce qu'il s'est déplacé vers la liaison pivot de sortie 103, a poussé, par sa paroi pleine 140 la tige de commande 170 vers la liaison pivot de sortie. La tige de commande 170 se retrouve déplacée vers l'extérieur du carter 100, dans une deuxième position de la tige de commande P12.

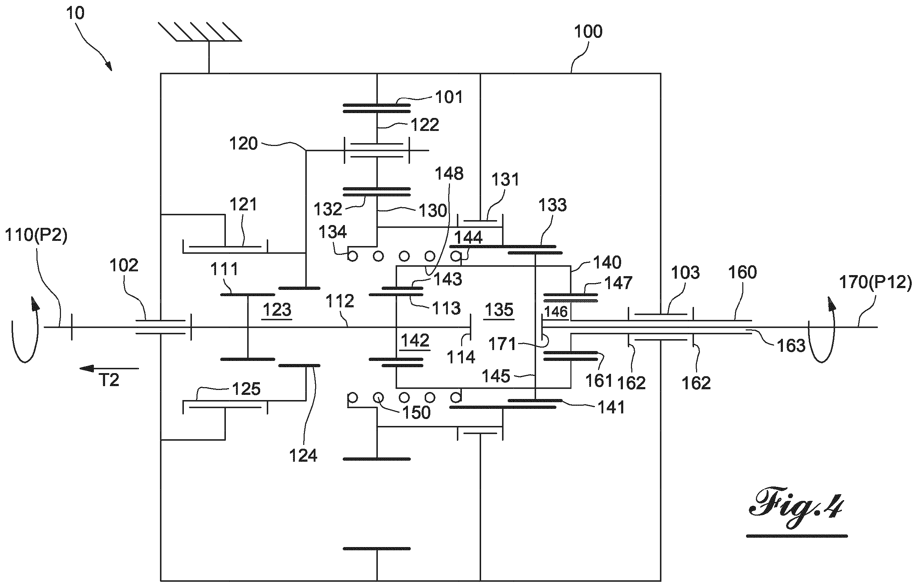

[Fig. 4] On va maintenant discuter de la conséquence d'une translation de l'arbre d'entrée 110 vers l'extérieur du carter 100 à partir de la configuration de la figure 3, comme cela est représenté en figure 4. Cette translation est notée deuxième translation T2 L'arbre d'entrée 110 est amené en butée vers l'extérieur, dans le cadre de la liaison d'entrée 102 dont on a dit qu'elle était une liaison pivot glissant. La butée est assurée par le carter 100. A l'issue de cette translation, l'arbre d'entrée 110 est dans une position qualifiée de deuxième position de l'arbre d'entrée P2, qui est celle qui avait été présentée en figure 2.

Cette translation a pour effet de dégager les premières cannelures de l'arbre d'entrée 111 de la portion cannelée du porte-satellites 124. On rappelle en effet que le porte-satellites 120 est immobilisé en translation axiale et il ne recule donc pas quand l'arbre d'entrée 110 recule.

La translation a aussi pour effet d'engager les deuxièmes cannelures de l'arbre d'entrée 113 avec les cannelures de couplage direct 143 de l'entraineur 140.

Le ressort de compression 150 maintient en effet l'entraineur 140 dans la position qu'il occupait en figure 3, et les cannelures externes de l'entraineur 141 restent engagées avec la même portion de cannelures glissantes de couplage à l'entraineur 133, sans glissement relatif de l'entraineur 140 vis-à-vis du pignon alésé 130. Pour la même raison, du fait de l'opposition du ressort de compression 150, les cannelures de l'arbre de sortie 161 restent engagées avec les cannelures de sortie de l'entraineur 147.

C'est ainsi, grâce au ressort de compression 150, que les deuxièmes cannelures de l'arbre d'entrée 113 s'engagent avec les cannelures de couplage direct 143 de l'entraineur 140, l'entraineur 140 étant resté immobile, alors que l'arbre d'entrée recule dans la position qu'il avait occupé dans la configuration de la figure 2, dans laquelle l'entraineur était quant à lui décalé vers l'intérieur du carter, éloigné de la sortie, et découplé de l'arbre de sortie, ce qui n'est pas le cas en figure 4.

Il en résulte, en figure 4, qu'une rotation de l'arbre d'entrée 110 autour de son axe entraine directement la rotation de l'entraineur 140 sans que le couple ne soit transmis par l'intermédiaire du porte-satellites 120 et du pignon alésé 130. Et l''entraineur 140 entraine alors en rotation l'arbre de sortie 160.

On va maintenant discuter d'un nouveau changement de configuration, qui peut être le déclenchement du moteur électrique du servomoteur. À partir de la configuration de la figure 4 dans laquelle la tige de commande est dans sa deuxième position P12, une poussée sur la tige de commande 170 vers l'intérieur du carter déplace l'entraineur 140, par appui de l'extrémité de la tige de commande 170 sur la paroi 145, vers la liaison pivot d'entrée 102, à l'encontre du ressort 150 qui oppose de la résistance mais est alors néanmoins compressé.

La translation a pour effet de dégager les deuxièmes cannelures de l'arbre d'entrée 113 des cannelures de couplage direct 143 de l'entraineur 140. En effet, l'arbre d'entrée 110 est en butée et ne recule pas - il n'est donc pas entrainé en translation par l'entraineur 140, et les cannelures de couplage direct 143 se désengagent donc des cannelures 113, et se retrouvent au droit de la portion non cannelée 112.

Les cannelures externes de l'entraineur 141 restent engagées avec les cannelures glissantes de couplage à l'entraineur 133, mais avec glissement relatif de l'entraineur 140 vis-à-vis du pignon alésé 130. Les cannelures de sortie de l'entraineur 147 se désengagent des cannelures de l'arbre de sortie 161, puisque l'arbre de sortie 160 n'est pas mobile en translation vis-à-vis du carter 100.

On retrouve la configuration de la figure 2, avec la tige de commande 170 dans sa première position P11, c'est à dire enfoncée dans le carter 100.

[Fig. 5] La figure 5 montre un aspect du montage de l'arbre d'entrée 110 vis-à-vis du carter 100. L'arbre d'entrée 110 est articulé vis-à-vis du carter 100 par l'intermédiaire d'un roulement à billes constituant un élément essentiel de la liaison pivot d'entrée 102. L'arbre d'entrée 110 porte aussi sur sa circonférence une nervure périphérique formant, en coupe, un ergot dit ergot de positionnement 115. Cet ergot est au contact d'un ressort à lame qualifié de ressort à lame de sélection de position 180. La lame de ce ressort est pliée pour offrir deux positions stables à l'arbre d'entrée 110 en offrant deux logements décalés le long de l'axe de l'arbre d'entrée 110 pour accueillir l'ergot de positionnement 115 en deux positions décalées correspondant à respectivement l'engagement des premières cannelures de l'arbre d'entrée 111 avec la portion cannelée du porte-satellites 124 et à l'engagement des cannelures de couplage direct 143 avec les deuxièmes cannelures de l'arbre d'entrée 113. Le ressort à lame de sélection de position 180 et l'ergot de positionnement 115 coopèrent ensemble et ont de plus une fonction supplémentaire, qui peut d'ailleurs être considérée comme leur fonction principale : ils permettent au poids du volant 1, quand l'axe est placé verticalement, d'être soutenu pour que le volant 1 et son arbre (arbre d'entrée 110) ne se déplacent pas du fait de la gravité. Cette fonction ne sert pas si l'arbre est placé horizontalement, mais le choix de l'orientation revient à l'industriel qui utile le système.

La figure 5 montre le système avec l'arbre d'entrée 110 tiré vers l'extérieur du carter 100, et l'ergot de positionnement 115 placé par conséquent dans le logement le plus proche du roulement à billes de la liaison pivot d'entrée 102, ou premier espace d'indication de positionnement 181.

[Fig. 6] La figure 6 montre le système avec l'arbre d'entrée 110 poussé vers l'intérieur du carter 100, et l'ergot de positionnement 115 placé par conséquent dans le logement le plus proche du porte-satellites 120 ou deuxième espace d'indication de positionnement 182.

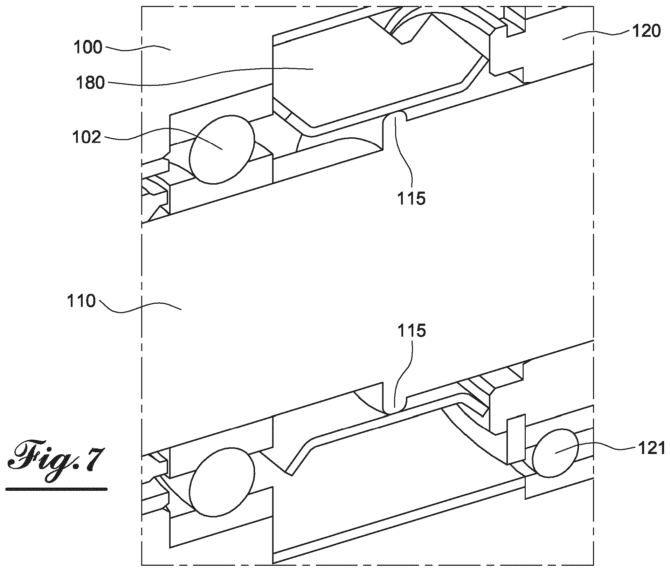

[Fig. 7] La figure 7 montre quant à elle le système avec l'arbre d'entrée 110 dans une position intermédiaire entre les deux positions fonctionnelles présentées précédemment : on voit que la lame du ressort à lame de sélection de position 180 est contrainte par la présence de l'ergot de positionnement 115 dans cette position intermédiaire dans laquelle aucun logement n'est prévu pour accueillir l'ergot de positionnement 115 : il en résulte que la position est instable, ou inconfortable pour l'opérateur qui manœuvre le volant 1 (dont l'axe est l'arbre d'entrée 110), et comprend de par le retour d'efforts qu'il perçoit en manœuvrant le volant 1, qu'il n'a pas encore atteint la position fonctionnelle qu'il recherche. Par conséquent, l'opérateur poursuit sa démarche de déplacement du volant 1 jusqu'à ce qu'il perçoive que celui-ci est dans une position plus stable ou mieux accueillie, ce qui est le cas quand l'ergot de positionnement 115 atteint ou premier espace d'indication de positionnement 181 ou le deuxième espace d'indication de positionnement 182 (en fonction du sens dans lequel le volant est déplacé).

Le volant est souvent actionné à la main, mais il est prévu, dans certaines mises en œuvre de l'actionner par un moteur électrique ou pneumatique, auquel il est alors relié par une douille. La manœuvre est alors plus rapide. Tous les constituants du mécanisme sont dimensionnés pour résister à une vitesse de rotation rapide. Le système est monté sur roulements.

L'invention prend d'autres formes, dans le cadre de la portée des revendications.

En particulier, la présence d'une liaison glissière entre l'entraineur 140 et le pignon alésé 130 n'est pas indispensable à la réalisation de l'invention dans sa plus grande généralité. Le pignon alésé 130 et l'entraineur 140 peuvent être remplacé par une pièce unique constituant un pignon solaire, alésé, qui ne participe pas alors à découpler le volant 1 de la vis sans fin 4 selon les principes ci-dessus.

De plus, il est possible de positionner les cannelures de telle sorte que le couplage direct soit obtenu en poussant le volant et la transmission par le train épicycloïdal en tirant le volant. Pour cela, on peut prévoir une seule section portant des cannelures sur l'arbre d'entrée 110, qui dans une position engage le porte-satellites, et dans l'autre position engage l'entraineur. Cela est compatible avec la mise en place d'une liaison glissière entre l'entraineur et le pignon alésé, moyennant le déplacement des points d'appui du ressort 150.

Par ailleurs, il n'est pas indispensable que le couplage direct entre l'arbre d'entrée et l'entraineur se fasse dans un alésage de l'entraineur : celui-ci peut, dans une variante, porter des cannelures externes sur un diamètre de petite taille qui entre dans un alésage pratiqué dans l'arbre, qui porterait quant à lui des cannelures internes engageant les cannelures externes de l'entraineur. Ou le couplage entre l'arbre d'entrée et l'entraineur peut se faire à l'aide de diverses formes de crabot.

Également, on peut envisager de placer un étage de réduction entre l'arbre d'entrée et le porte-satellite.

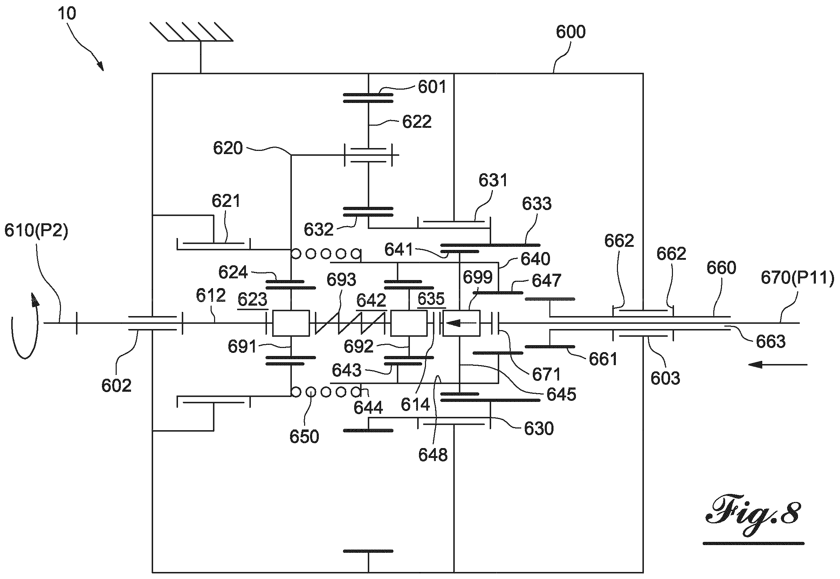

[Fig. 8] En figure 8 on a représenté un deuxième mode de réalisation d'un module de transmission de puissance 10 selon l'invention.

Comme au premier mode de réalisation le module de transmission de puissance 10 comprend dans un carter 600, un porte-satellites 620, un pignon alésé, une pièce ayant globalement une symétrie de révolution, constituant extérieurement une section d'arbre et comprenant deux alésages intérieurs (ces éléments seront décrits plus loin) qualifiée d'entraineur 640 et un ressort de compression 650.

Comme au premier mode de réalisation le module de transmission de puissance 10, en fonction de son état de configuration, peut recevoir de la puissance mécanique en entrée sur un arbre d'entrée 610, l'arbre du volant et fournir de la puissance sur un arbre de sortie 660, en l'occurrence une vis sans fin. Ces deux arbres sont coaxiaux. Sur la figure 8 ils sont découplés ce qui a pour conséquence que la rotation de l'arbre d'entrée 610 qui reçoit de la puissance n'est pas transmise à l'arbre de sortie 660 qui est immobile (ou vice versa). Ainsi, la boite de vitesses est au neutre.

Par ailleurs, comme au premier mode de réalisation, une tige de commande 670, ou tringle, profite du fait que l'arbre de sortie est creux pour être introduite à l'intérieur du mécanisme présenté, par l'intérieur de l'arbre de sortie 660. Cette tige de commande 670 est l'extrémité de l'actionneur traversant 6 présenté en figure 1.

Le carter 600 comprend comme au premier mode de réalisation sur sa face intérieure une couronne dentée 601, dentée vers l'intérieur, une liaison pivot d'entrée 602 (un pivot glissant) pour accueillir l'arbre d'entrée 610 et une liaison pivot de sortie 603 (un pivot non glissant) pour maintenir axialement l'arbre de sortie 660. La couronne dentée 601 et les deux liaisons pivots 602 et 603 d'entrée et de sortie sont coaxiales. L'arbre d'entrée 610 est en liaison pivot glissant avec le carter 600, la translation étant limitée par des butées dans les deux sens.

La portion de l'arbre d'entrée 610 à l'intérieur du carter 600 porte successivement, dans l'ordre depuis la liaison pivot d'entrée 602 vers l'intérieur du carter 100, une portion non cannelée 612, un premier baladeur cannelé extérieurement dit premier baladeur 691, et un deuxième baladeur cannelé aussi vers l'extérieur dit deuxième baladeur 692, puis son extrémité dite extrémité de l'arbre d'entrée 614. Les deux baladeurs 691 et 692 sont poussés l'un par rapport à l'autre le long de l'arbre en sens opposés par un ressort de compression 693 monté autour de l'arbre 610 et appuyé à ses deux extrémités contre les deux baladeurs respectivement. Leurs déplacements longitudinaux vis-à-vis de l'arbre 610 sont limités, pour le premier baladeur 691 par une butée en direction du volant et portée par l'arbre, et pour le deuxième 692 par une butée en direction de l'extrémité de l'arbre d'entrée 614, cette deuxième butée étant aussi portée par l'arbre (ces deux butées sont constituées par des épaulements de l'arbre, les baladeurs étant montés dans une section rétrécie de celui-ci). Le ressort 693 est par ailleurs choisi pour, en l'absence de force ou obstacle s'y opposant, pousser en butée les deux baladeurs simultanément.

Comme au premier mode de réalisation, le porte-satellites 620 est monté vis-à-vis du carter 600 à l'aide d'un palier 621 coaxial avec les liaisons pivots d'entrée 602 et de sortie 603 ainsi qu'avec la couronne dentée 601. Le porte-satellites 620 comprend un ou plusieurs satellites 622 qui engrainent tous sur la couronne dentée 601. Ils ont des axes de rotation parallèles à l'axe de rotation du porte-satellites 620.

Comme au premier mode de réalisation, le porte-satellites 620 comporte un alésage traversant 623 coaxial avec les liaisons pivots d'entrée et de sortie ainsi qu'avec la couronne dentée.

L'alésage 623 est dimensionné pour accueillir en son intérieur l'arbre d'entrée 610 avec ses baladeurs, ou en tout cas le premier baladeur 691. L'alésage traversant 623 comporte une section cylindrique cannelée dite portion cannelée du porte-satellites 624, qui est adaptée à former une liaison avec les cannelures du baladeur, qui sont complémentaires.

Comme au premier mode de réalisation le module de transmission de puissance 10 comprend également un pignon alésé (déjà mentionné) 630 monté avec une liaison pivot 631 (non glissant) vis-à-vis du carter 600 coaxialement avec l'arbre d'entrée 610 et l'arbre de sortie 660 ainsi qu'avec le porte-satellites 620. Ce pignon alésé 630 forme tout ou partie du pignon solaire d'un train épicycloïdal fondé sur le porte-satellites 620 et dont la couronne dentée 601 constitue l'autre pignon planétaire. Le pignon alésé 630 comprend une denture d'engrenage externe dite denture du pignon alésé 632 qui engraine ainsi avec le ou les satellites 622. Ainsi les satellites engrainent avec le pignon alésé 630. Comme au premier mode de réalisation le pignon alésé 630 comprend un alésage traversant coaxial avec l'arbre d'entrée 610 et l'alésage traversant 623 du porte-satellites 620, cet alésage du pignon alésé étant dit alésage de réception de l'entraineur 635. Le pignon alésé 630 porte sur la surface de cet alésage de réception de l'entraineur 635 des cannelures dite cannelures glissantes de couplage à l'entraineur 633, qui ont une longueur axiale importante, pour permettre le glissement de cannelures plus courtes, de la surface extérieure de l'entraineur.

Comme au premier mode de réalisation l'entraineur 640 est une pièce cylindrique de révolution creuse disposée coaxialement avec l'arbre d'entrée 610 et l'alésage traversant 623 du porte-satellites 620. Il porte des cannelures sur sa surface externe, dites cannelures externes de l'entraineur 641. Les cannelures glissantes de couplage à l'entraineur 633 du pignon alésé 630 sont engagées avec les cannelures externes de l'entraineur 641. Mais les cannelures glissantes de couplage à l'entraineur 633 du pignon alésé 630 ont une longueur supérieure aux cannelures externes de l'entraineur 641, et celles-ci interagissent, dans la configuration de la figure 8, avec la partie des cannelures glissantes de couplage à l'entraineur 633 qui se situe du côté de la liaison pivot d'entrée 602.

Comme au premier mode de réalisation l'entraineur 640 est une pièce cylindrique ayant globalement une symétrie de révolution, et creuse, comprenant une paroi 645 transversale à l'axe du module de transmission de puissance 10.

La paroi 645 constitue, du côté de la liaison pivot d'entrée 602, un fond pour l'alésage de l'entraineur débouchant du côté de la liaison pivot d'entrée 602 dit alésage de couplage direct au volant 642.

L'alésage d'entrée de l'entraineur ou alésage de couplage direct au volant 642 porte sur sa surface des cannelures dit cannelures de couplage direct 643, pour coupler l'entraineur avec l'arbre d'entrée 610, par le deuxième baladeur 692. Ces cannelures définissent une section cylindrique de l'alésage, à laquelle succède, vers l'entrée de l'alésage, vers la liaison pivot d'entrée 602, une section cylindrique lisse, sans cannelures.

Comme au premier mode de réalisation de l'autre côté de la paroi 645, l'entraineur comprend des cannelures dirigées vers l'axe dans son alésage débouchant du côté de la liaison pivot de sortie. Cet alésage sert pour le couplage à la vis sans fin et les cannelures sont des cannelures de sortie de l'entraineur 647.

Comme au premier mode de réalisation, l'entraineur 640 comporte sur sa périphérie une surface périphérique annulaire pour appui latéral dans un plan perpendiculaire à l'axe, pour l'appui latéral d'un ressort, et faisant face au côté du carter sur lequel se situe l'arbre d'entrée 610.

Faisant face à cette surface périphérique annulaire pour appui latéral 644, le porte-satellites 620 comporte quant à lui une surface annulaire pour appui latéral, dans un plan perpendiculaire à l'axe, pour l'appui latéral d'un ressort, et faisant face au côté du carter sur lequel se situe l'arbre de sortie. Il s'agit là d'un montage équivalent au montage montré au premier mode de réalisation (les deux montages sont interchangeables) : le ressort de compression 650, au lieu de s'appuyer sur le pignon alésé, s'appuie sur le porte-satellites 620, qui est longitudinalement fixe vis-à-vis du carter, comme le pignon alésé. S'appuyer sur l'un ou l'autre est donc du même effet et revient à s'appuyer sur le carter. Le ressort de compression 650 est ainsi ici mis en place entre le porte-satellites 620 et l'entraineur 640, qui se font face, mais il gouverne surtout le glissement de l'entraineur 640 vis-à-vis du pignon alésé 630 le long des cannelures glissantes.

Comme au premier mode de réalisation l'arbre de sortie 660 comprend des cannelures externes et il est bloqué en translation axiale par des butées de translation 662 intégrées dans le carter 600. L'arbre de sortie 660 est de plus un arbre creux comprenant un alésage dit alésage de l'arbre de sortie 663. Une tige de commande 670 est insérée dans l'alésage de l'arbre de sortie 663, et l'extrémité de la tige de commande 671 s'approche de la paroi 645 de l'entraineur, dans une position dite première position de la tige de commande P11, enfoncée dans le carter 600, représentée à la figure 8.

Une entretoise 699 allongée est montée traversante à la paroi 645, perpendiculairement à celle-ci et fixée en liaison glissière d'axe parallèle à l'arbre 610. Elle constitue une butée avec débattement pour l'arbre 610 et pour la tige 670, et permet de transférer une poussée de l'arbre 610 à la tige 670 et inversement, sans déplacer l'entraineur 640.

En figure 8 l'arbre d'entrée 610 est couplé dans sa position P2 au porte-satellites 125 par le premier baladeur 691.

Telle que représentée en figure 8, dans cette position neutre, d'une part, la tige de commande 670 est rentrée dans le carter 600 (il s'agit de la première position de la tige de commande P11), et l'extrémité de la tige de commande 671 a déplacé l'entraineur 640 vers la gauche, ce qui a eu pour conséquence de désengager les cannelures de sortie de l'entraineur 647 des cannelures de l'arbre de sortie 661.

D'autre part, le premier baladeur 691 est engagé à la portion cannelée du porte-satellites 624 ou ne l'est pas, étant alors décalé dans la direction du deuxième baladeur, 692, comprimant alors le ressort 693, du fait d'un décalage angulaire entre les cannelures 624 du porte-satellites et celles du premier baladeur 691.

Et le deuxième baladeur 692 est engagé aux cannelures de couplage direct 643 ou ne l'est pas, étant alors décalé dans la direction du premier baladeur, 691, comprimant alors le ressort 693, du fait d'un décalage angulaire entre les cannelures 643 de l'entraineur et celles du deuxième baladeur 692.

Possiblement, un des deux baladeurs est engagé, l'autre ne l'étant pas, en fonction du rapport de vitesses qui était engagé au moment du passage au neutre.

Il y a aussi libre rotation de la vis sans fin, c'est-à-dire l'arbre de sortie 660, vis à vis de l'arbre d'entrée puisque la vis sans fin n'est pas reliée à l'entraineur 640.

Dans la configuration de la figure 8, le ressort de compression 650 est comprimé, et il est prêt à aider à un déplacement axial relatif de l'entraineur 640 vis-à-vis du pignon alésé 630. Mais il est maintenu comprimé par la tige 670 qui contraint vers le volant l'entretoise 699 jusqu'au bout de son débattement, ainsi que l'entraineur sur lequel elle appuie par l'intermédiaire de l'entretoise 699. L'entraineur comprime donc le ressort 650.

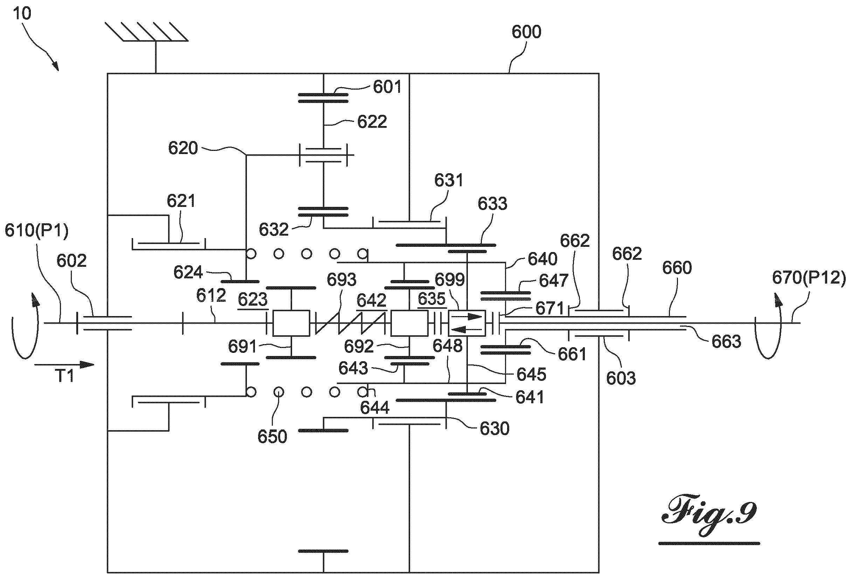

[Fig. 9] On va maintenant envisager le passage de la configuration de la figure 8 (l'un ou l'autre des deux baladeurs étant engagé), vers la figure 9, par translation T1 du volant et de son arbre vers l'intérieur du carter.

Ce passage se fait en deux temps, le premier temps impliquant l'entretoise 699, qui reste optionnelle néanmoins dans l'invention.

L'effet initial de la translation T1 (notée première translation) de l'arbre d'entrée 610 vers l'intérieur du carter 600 grâce à la liaison d'entrée 602 dont il a été dit qu'il s'agit d'une liaison pivot glissant est le suivant.

Cette translation nécessite un effort de l'opérateur qui appuie sur l'arbre 610, qui appuie à son tour sur l'entretoise 699 qui rencontre la tige 670. L'opérateur contre alors la résistance opposée par la tige 670. Puis l'entretoise arrivant au bout de son débattement, il déplace l'entraineur.

Il est aidé par le ressort de compression 650, qui tend naturellement à pousser l'entraineur 640 vers la partie du mécanisme opposée à la liaison d'entrée 602. Rapidement au cours de cette translation, l'arbre d'entrée 610 est dans une position qualifiée de première position de l'arbre d'entrée P1 : l'arbre d'entrée 610 est enfoncé dans le carter 100. L'entraineur 640 s'est aussi déplacé vers la liaison de sortie 603, et l'entretoise 699 s'est déplacée vers la liaison de sortie par rapport à l'entraineur 640, car l'arbre d'entrée s'est appuyée sur elle, et ce n'est qu'après avoir effectué ce mouvement relatif vis-à-vis de l'entraineur qu'elle a pu entrainer celui-ci vers l'arbre de sortie, ce en quoi elle a été aidée par le ressort 650.

De plus l'entretoise 699 a d'emblée poussé dans la direction de l'extérieur du carter la tige de commande 670. La tige de commande 670 se retrouve déplacée vers l'extérieur du carter 600, dans une deuxième position de la tige de commande P12. Le moteur est débrayé en conséquence, et la sécurité de l'opérateur manipulant le volant est assurée.

L'entraineur n'a pas à ce stade engagé l'arbre de sortie (la vis sans fin) 660. Une petite rotation peut être nécessaire pour que les cannelures complémentaires 647 et 661 s'engagent, et il peut donc y avoir une résistance à ce stade. Néanmoins, le moteur est d'ores et déjà débrayé grâce à l'appui de l'arbre d'entrée sur l'entretoise 699 et au déplacement de celle-ci qui a permis de pousser la tige de commande 670.

De plus le premier baladeur 691 s'est dégagé de la portion cannelée du porte-satellites 624 (s'il y était engagé), car l'arbre d'entrée 610 a progressé dans le carter, alors que le porte-satellites 620 n'a pas bougé, et que le baladeur 691 est en butée sur l'arbre 610 dans la direction du volant (le déplacement de l'arbre en direction opposée au volant l'entraine donc dans un mouvement identique).

Le ressort 650 s'est détendu partiellement.

[Fig. 9] La figure 9 montre le résultat final de la translation T1 (notée première translation) de l'arbre d'entrée 610 vers l'intérieur du carter, après si besoin une petite rotation relative de l'entraineur et de l'arbre de sortie, le ressort 650 se détendant complètement.

L'arbre d'entrée 610 entraine en rotation l'entraineur 640.

L'entraineur 640 s'est déplacé vers la vis sans fin. L'entraineur et l'entretoise 699 ont retrouvé, après un déplacement relatif transitoire, leurs positions relatives l'un par rapport à l'autre de la figure 8, de par la résistance opposée par la tige 670 et la pression apportée par le ressort 650. Le déplacement transitoire de l'entretoise 699 est représenté par les deux flèches dans son rectangle, au dessin.

La rotation des deux arbres, en entrée et en sortie est donc en couplage direct (rapport de vitesses égal à 1). L'arbre d'entrée 610 entraine donc en rotation l'arbre de sortie 660, sans démultiplication ou réduction.

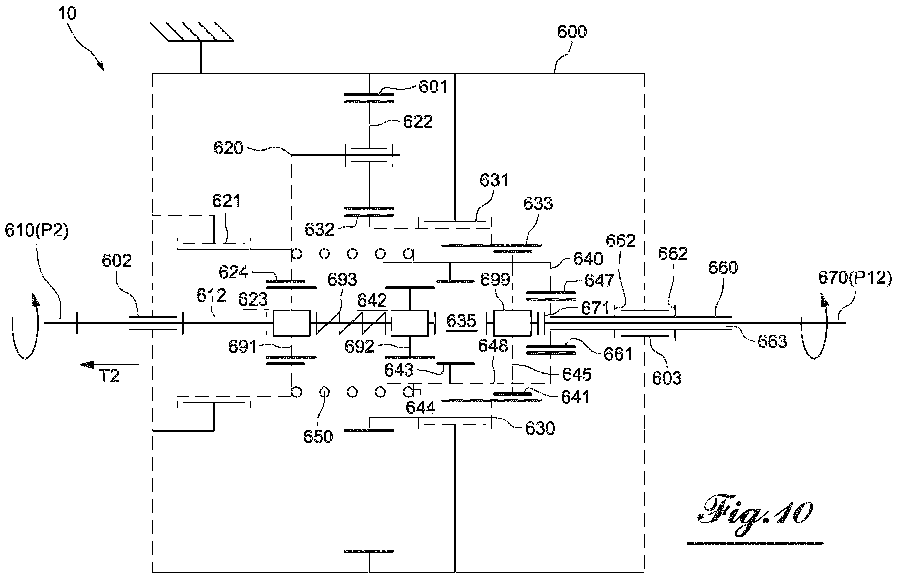

[Fig. 10] On va maintenant discuter de la conséquence d'une translation de l'arbre d'entrée 610 vers l'extérieur du carter 600 à partir de la configuration de la figure 9, comme cela est représenté en figure 10. Cette translation est notée deuxième translation T2.

L'arbre d'entrée 610 est amené vers l'extérieur, dans le cadre de la liaison d'entrée 602 dont on a dit qu'elle était une liaison pivot glissant.

Dans un premier temps, la translation a aussi pour effet de dégager le deuxième baladeur 692 des cannelures de couplage direct 643 de l'entraineur 640.

Le ressort de compression 650 maintient en effet l'entraineur 640 dans la position qu'il occupait en figure 9. Les cannelures de l'arbre de sortie 661 restent engagées avec les cannelures de sortie de l'entraineur 647. Mais le deuxième baladeur est emmené vers le volant par la butée qu'il rencontre dans la direction de la fin de l'arbre sur lequel il est monté.

Par contre, le premier baladeur 691 peut être en difficulté pour engager les cannelures du porte-satellites, si un décalage angulaire constitue une gêne. Dans une telle situation, le baladeur se déplace en compressant le ressort 693. Le fait qu'il glisse sur l'arbre 610 permet d'accommoder cette difficulté, qui est résolue dès qu'une rotation est appliquée sur le volant, grâce à la détente du ressort 693 qui favorise l'engagement des cannelures du porte-satellites et du premier baladeur 691. Sachant que le porte-satellites 620 est immobilisé en translation axiale et il ne recule donc pas quand l'arbre d'entrée 610 recule.

Il en résulte, en figure 10, qu'une rotation de l'arbre d'entrée 610 autour de son axe entraine la rotation de l'entraineur 640 le couple étant transmis par l'intermédiaire du porte-satellites 620, des satellites et du pignon alésé 630 avec donc un rapport de vitesses non unitaire.

A l'issue de cette translation T2, l'arbre d'entrée 610 est dans une position qualifiée de deuxième position de l'arbre d'entrée P2, qui est celle, ou similaire à celle, qui avait été présentée en figure 8.

On va maintenant discuter d'un nouveau changement de configuration, qui peut être le déclenchement du moteur électrique du servomoteur. À partir de la configuration de la figure 9 ou de la configuration de la figure 10 dans laquelle la tige de commande est dans sa deuxième position P12, une poussée sur la tige de commande 670 vers l'intérieur du carter déplace l'entraineur 640, par appui de l'extrémité de la tige de commande 670 sur l'entretoise 699 qui une fois en fin de course, entraine la paroi 645 et donc tout l'entraineur, vers la liaison pivot d'entrée 602, à l'encontre du ressort 650 qui est alors progressivement compressé.

La translation a donc pour effet de dégager les cannelures 647 de l'entraineur et 661 de la vis sans fin (l'arbre de sortie).

À partir de la configuration de la figure 9 la translation peut avoir pour effet d'engager le premier baladeur 691 avec les cannelures du porte-satellites. Le premier baladeur 691 peut aussi, alternativement, reculer vers la vis sans fin le long de l'arbre en comprimant le ressort 693, si l'engagement des cannelures n'est pas facile par défaut d'alignement angulaire, mais le ressort 693 contraint le premier baladeur 691 à s'engager avec le porte-satellites dès qu'un tel éventuel décalage angulaire est surmonté, ce qui se produit si le volant est tourné.

De même à partir de la configuration de la figure 10 la translation peut avoir pour effet d'engager le deuxième baladeur 692 avec les cannelures de couplage direct 643. En effet, l'arbre d'entrée 110 est en butée et ne recule pas - le deuxième baladeur 692 peut reculer le long de l'arbre vers le volant en comprimant le ressort 693, si l'engagement des cannelures n'est pas facile par défaut d'alignement angulaire, mais le ressort 693 contraint le deuxième baladeur 692 à s'engager avec l'entraineur dès qu'un tel éventuel décalage angulaire est surmonté, ce qui se produit si le volant est tourné.

On retrouve dans tous les cas la configuration de la figure 8, avec la tige de commande 670 dans sa première position P11, c'est à dire enfoncée dans le carter 600.Les baladeurs permettent ainsi de surmonter des difficultés d'engagement d'arbres cannelés et d'alésage cannelés complémentaires, qui peuvent se produire quand les cannelures ne sont pas très fines. Ainsi, il est possible de choisir un mode de réalisation sans baladeur, mais avec des cannelures très fines.

Et l'entretoise coulissante 699, optionnelle, permet de débrayer le moteur électrique avant d'engager la commande manuelle, lors du passage de la configuration de la figure 8 (neutre) à la configuration de la figure 9 (couplage direct - rapport de vitesses égal à 1).

### ESM ensemble servomoteur

1 volant
2 moteur électrique
21 rotor du moteur électrique
3 roue
4 vis sans fin
5 système de débrayage
6 actionneur traversant
61 tige d'actionnement
62 ressort de connexion du moteur
10 module de transmission de puissance
100, 600 carter
101, 601 couronne dentée
102, 602 liaison pivot d'entrée
103, 603 liaison pivot de sortie
110, 610 arbre d'entrée
111 premières cannelures de l'arbre d'entrée 691 premier baladeur ou baladeur d'entrée, baladeur cannelé
112 portion d'arbre non cannelée
113 deuxièmes cannelures de l'arbre d'entrée 692 deuxième baladeur ou baladeur de sortie, baladeur cannelé
693 petit ressort de compression
114 extrémité de l'arbre d'entrée (présente mais non référencée, pour alléger le dessin, dans le 2^{e} mode de réalisation)
115 ergot de positionnement
120, 620 porte-satellites
121, 621 pallier
122, 622 satellites
123, 623 alésage traversant
124, 624 portion cannelée du porte-satellites
125 portion non cannelée de l'alésage du porte-satellites
130, 630 pignon alésé
131, 631 liaison pivot
132, 632 denture du pignon alésé
133, 633 cannelures glissantes de couplage à l'entraineur
134 surface annulaire d'appui latéral du pignon alésé
135, 635 alésage de réception de l'entraineur
140, 640 entraineur
141, 641 cannelures externes de l'entraineur
142, 642 alésage de couplage direct au volant
143, 643 cannelures de couplage direct
144, 644 surface annulaire d'appui latéral de l'entraineur
145, 645 paroi pleine ou paroi recevant éventuellement une entretoise
146 alésage de couplage à la vis sans fin (présent mais non référencé, pour alléger le dessin, dans le 2^{e} mode de réalisation)
147, 647 cannelures de sortie de l'entraineur
148 portion non cannelée de l'alésage de couplage direct
150, 650 ressort de compression
160, 660 arbre de sortie
161, 661 cannelures de l'arbre de sortie
162, 662 butées de translation
163, 663 alésage de l'arbre de sortie
170, 670 tige de commande
171, 671 extrémité de la tige de commande
180 ressort à lame de sélection de position
181 premier espace d'indication de positionnement
182 deuxième espace d'indication de positionnement
P1 première position de l'arbre d'entrée
P2 deuxième position de l'arbre d'entrée
T1 première translation axiale de l'arbre d'entrée
T2 deuxième translation axiale de l'arbre d'entrée
P11 première position de la tige de commande
P12 deuxième position de la tige de commande

## Revendications

1. Module de transmission de puissance mécanique (10) comprenant un carter (100 ; 600) et une pluralité de pièces mécaniques (101, 120, 122, 130, 140 ; 601, 620, 622, 630, 640) montées coaxialement, ladite pluralité de pièces mécaniques formant un train épicycloïdal dont une entrée/sortie (101 ; 601) est immobilisée vis-à-vis du carter (100 ; 600), deux autres entrées/sorties du train épicycloïdal étant formées par un assemblage d'entrée (120, 122 ; 620, 622) et un assemblage de sortie (130, 140; 630, 640), la puissance étant de plus amenée à la pluralité de pièces mécaniques (101, 120, 122, 130, 140 ; 601, 620, 622, 630, 640) par un arbre d'entrée (110 ; 610) du module de transmission (10) coaxial avec les pièces de la pluralité de pièces mécaniques (101, 120, 122, 130, 140 ; 601, 620, 622, 630, 640), l'arbre d'entrée (110 ; 610) étant couplé avec l'assemblage de sortie (130, 140; 630, 640) par l'intermédiaire de l'assemblage d'entrée (120, 122 ; 620, 622) dans une première position axiale (P1) de l'arbre d'entrée (110 ; 610) vis-à-vis du carter (100) définissant un premier rapport de vitesses du module de transmission (10), lequel assemblage d'entrée (120, 122 ; 620, 622) comporte un alésage traversant (123 ; 623) central, ledit alésage traversant (123 ; 623) et l'arbre d'entrée (110 ; 610) portant des cannelures complémentaires (124, 111 ; 624, 691) pour le couplage de l'arbre d'entrée avec l'assemblage d'entrée, l'arbre d'entrée (110 ; 610) monté glissant (102 ; 602) vis-à-vis du carter (100 ; 600), glissant dans l'alésage traversant (123 ; 623) pour se coupler avec l'assemblage de sortie (130, 140; 630, 640) dans une deuxième position (P2) de l'arbre d'entrée (110 ; 610) vis-à-vis du carter (100 ; 600), différant de la première position (P1) par une translation axiale (T2), dans laquelle lesdites cannelures complémentaires (124, 111 ; 624, 691) ne sont plus engagées, et qui définit un deuxième rapport de vitesses du module de transmission (10), **caractérisé en ce que** l'assemblage de sortie (130, 140; 630, 640) comprend un pignon alésé (130 ; 630) couplé à l'assemblage d'entrée (120, 122 ; 620, 622) par une denture extérieure (132 ; 632) et un entraineur central (140 ; 640), montés l'un par rapport à l'autre en liaison glissière axiale, l'entraineur (140 ; 640) comportant des moyens d'appui (145 ; 645) pour subir une poussée axiale dans un sens par une tige de commande (170 ; 670) et pour subir une poussée axiale par l'arbre d'entrée (110 ; 610) dans l'autre sens et des cannelures (147, 647) pour le couplage et le découplage vis-à-vis d'une sortie (160 ; 660) du module de transmission (10), un ressort (150 ; 650) étant placé en sorte de s'opposer au glissement de l'entraineur (140 ; 640) vis à vis du pignon alésé (130 ; 630) quand l'arbre d'entrée (110 ; 610) se déplace vis-à-vis de l'assemblage de sortie (130, 140; 630, 640).

2. Module de transmission de puissance mécanique (10) selon la revendication 1, **caractérisé en ce que** ledit assemblage d'entrée (120, 122 ; 620, 622) constitue le porte-satellites (120 ; 620) du train épicycloïdal muni de ses satellites (122 ; 622), couplé sans réduction à l'arbre d'entrée (110 ; 610) dans la première position (P1), l'alésage traversant (123 ; 623) étant un alésage du porte-satellites (120 ; 620).

3. Module de transmission de puissance mécanique (10) selon la revendication 1 ou 2, **caractérisé en ce que** les moyens d'appui sont constitués d'une paroi (145 ; 645) transversale à l'axe du module de transmission de puissance (10) portant éventuellement une entretoise (699) coulissant axialement selon un débattement borné dans les deux sens.

4. Module de transmission de puissance mécanique selon l'une des revendications 1 à 3, **caractérisé en ce qu'**un ressort à lame (180) du module de transmission est présent entre l'assemblage d'entrée (120, 122 ; 620, 622) et un palier (121) reliant l'arbre d'entrée (110 ; 610) et le carter (100 ; 600), retient l'arbre malgré le poids de celui-ci, et coopère avec une forme portée par l'arbre d'entrée (110 ; 610) pour signaler à un opérateur déplaçant axialement l'arbre d'entrée (110 ; 610) qu'il a atteint la première ou la deuxième position.

5. Module de transmission de puissance mécanique selon l'une des revendications 1 à 4, caractérisé en ce l'arbre d'entrée (110 ; 610) dans la première position (P1) est moins enfoncé dans le carter (100 ; 600) que dans la deuxième position (P2),

6. Utilisation d'un module de transmission de puissance mécanique (10) selon l'une des revendications 1 à 5, pour la mise en service initiale d'un servomoteur électrique sur une vanne ou vantelle de contrôle d'un fluide circulant dans une canalisation, ou pour une manœuvre de sécurité sur ladite vanne, la vanne ou vantelle étant manœuvrée par l'intermédiaire d'un arbre de transmission portant une roue (3), l'arbre d'entrée (110 ; 610) étant couplé à un volant (1) constituant une commande manuelle, l'assemblage de sortie (130, 140; 630, 640) étant couplé à une vis sans fin (4) qui engraine la roue (3).

## Patentansprüche

1. Mechanisches Kraftübertragungsmodul (10) umfassend ein Gehäuse (100; 600) und eine Vielzahl von koaxial montierten mechanischen Teilen (101, 120, 122, 130, 140; 601, 620, 622, 630, 640), wobei die Vielzahl von mechanischen Teile einen Planetenradsatz bildet, wovon ein Ein-/Ausgang (101; 601) gegenüber dem Gehäuse (100; 600) fixiert ist, zwei anderen Ein-/Ausgänge des Planetenradsatzes durch eine Eingangsanordnung (120, 122; 620, 622) und eine Ausgangsanordnung (130, 140; 630, 640) gebildet sind, wobei die Leistung der Vielzahl von mechanischen Teilen (101, 120, 122, 130, 140; 601, 620, 622, 630, 640) zusätzlich durch eine Eingangswelle (110; 610) des Übertragungsmoduls (10) zugeführt wird, die koaxial zu den Teilen der Vielzahl von mechanischen Teilen (101, 120, 122, 130, 140; 601, 620, 622, 630, 640) ist, die Eingangswelle (110; 610) mittels der Eingangsanordnung (120, 122; 620, 622) in einer ersten axialen Position (P1) der Eingangswelle (110; 610) gegenüber dem Gehäuse (100), die ein erstes Übersetzungsverhältnis des Übertragungsmoduls (10) definiert, mit der Ausgangsanordnung (130, 140; 630, 640) gekoppelt ist, die Eingangsanordnung (120, 122; 620, 622) eine mittlere Durchgangsbohrung (123; 623) umfasst, wobei die Durchgangsbohrung (123; 623) und die Eingangswelle (110; 610) komplementäre Keilnuten (124, 111; 624, 691) zum Koppeln der Eingangswelle mit der Eingangsanordnung tragen, die Eingangswelle (110; 610), die gleitend (102; 602) gegenüber dem Gehäuse (100; 600) montiert ist, in der Durchgangsbohrung (123; 623) gleitet, um in einer zweiten Position (P2) der Eingangswelle (110; 610) gegenüber dem Gehäuse (100; 600), die sich von der ersten Position (P1) durch eine axiale Translation (T2) unterscheidet, mit der Ausgangsanordnung (130, 140; 630, 640) zu koppeln, in der die komplementären Keilnuten (124, 111; 624, 691) nicht mehr in Eingriff sind, und die ein zweites Übersetzungsverhältnis des Übertragungsmoduls (10) definiert, **dadurch gekennzeichnet ist, dass** die Ausgangsanordnung (130, 140; 630, 640) ein gebohrtes Ritzel (130; 630), das über eine Außenverzahnung (132; 632) mit der Eingangsanordnung (120, 122; 620, 622) gekoppelt ist, und einen mittleren Mitnehmer (140; 640) umfasst, die in Bezug aufeinander in axialer Gleitverbindung montiert sind, der Mitnehmer (140; 640) Lagereinrichtungen (145; 645), um in einer Richtung axial durch eine Steuerstange (170; 670) geschoben zu werden und um in der anderen Richtung axial durch die Eingangswelle (110; 610) geschoben zu werden, und Keilnuten (147, 647) zum Koppeln und Entkoppeln gegenüber einem Ausgang (160; 660) des Übertragungsmoduls (10) umfasst, eine Feder (150; 650) platziert ist, um dem Gleiten des Mitnehmers (140; 640) gegenüber dem gebohrten Ritzel (130; 630) entgegenzuwirken, wenn sich die Eingangswelle (110; 610) gegenüber der Ausgangsanordnung (130, 140; 630, 640) bewegt.

2. Mechanisches Kraftübertragungsmodul (10) nach Anspruch 1, **dadurch gekennzeichnet, dass** die Eingangsanordnung (120, 122; 620, 622) den Planetenradträger (120; 620) des mit seinen Planetenrädern (122; 622) versehenen Planetenradsatzes bildet, der in der ersten Position (P1) ohne Untersetzung mit der Eingangswelle (110; 610) gekoppelt ist, wobei die Durchgangsbohrung (123; 623) eine Bohrung des Planetenradträgers (120; 620) ist.

3. Mechanisches Kraftübertragungsmodul (10) nach Anspruch 1 oder 2, **dadurch gekennzeichnet, dass** die Lagereinrichtungen aus einer quer zu der Achse des Kraftübertragungsmoduls (10) verlaufenden Wand (145; 645) bestehen, die optional einen Abstandhalter (699) trägt, der axial gemäß einem in beiden Richtungen begrenzten Ausschlag gleitet.

4. Mechanisches Kraftübertragungsmodul nach einem der Ansprüche 1 bis 3, **dadurch gekennzeichnet, dass** eine Blattfeder (180) des Übertragungsmoduls zwischen der Eingangsanordnung (120, 122; 620, 622) und einem Lager (121), das die Eingangswelle (110; 610) und das Gehäuse (100; 600) verbindet, vorhanden ist, die Welle trotz ihres Gewichts hält und mit einer von der Eingangswelle (110; 610) getragenen Form zusammenwirkt, um einem Bediener, der die Eingangswelle (110; 610) axial bewegt, zu signalisieren, dass sie die erste oder die zweite Position erreicht hat.

5. Mechanisches Kraftübertragungsmodul nach einem der Ansprüche 1 bis 4, **dadurch gekennzeichnet, dass** die Eingangswelle (110; 610) in der ersten Position (P1) weniger tief in das Gehäuse (100; 600) hineingedrückt ist als in der zweiten Position (P2),

6. Verwendung eines mechanischen Kraftübertragungsmoduls (10) nach einem der Ansprüche 1 bis 5 für die anfängliche Inbetriebnahme eines elektrischen Stellmotors an einem Ventil oder einer Armatur zum Steuern eines in einer Rohrleitung zirkulierenden Fluids oder für ein Sicherheitsmanöver an dem Ventil, wobei das Ventil oder der Schieber über eine Antriebswelle betätigt wird, die ein Rad (3) trägt, wobei die Eingangswelle (110; 610) mit einem Handrad (1) gekoppelt ist, das eine manuelle Steuerung darstellt, die Ausgangsanordnung (130, 140; 630, 640) mit einer Schnecke (4) gekoppelt ist, die das Rad (3) eingreift.

## Claims

1. A mechanical power transmission module (10) comprises a casing (100; 600) and a plurality of mechanical parts (101, 120, 122, 130, 140; 601, 620, 622, 630, 640) mounted coaxially, said plurality of mechanical parts forming a planetary gear train of which one input/output (101; 601) is fixed relative to the casing (100; 600), two other inputs/outputs of the planetary gear train being formed by an input assembly (120, 122; 620, 622) and an output assembly (130, 140; 630, 640), the power furthermore being supplied to the plurality of mechanical parts (101, 120, 122, 130, 140; 601, 620, 622, 630, 640) by an input shaft (110; 610) of the transmission module (10) coaxial with the parts of the plurality of mechanical parts (101, 120, 122, 130, 140; 601, 620, 622, 630, 640), the input shaft (110; 610) being coupled to the output assembly (130, 140; 630, 640) by means of the input assembly (120, 122; 620, 622) in a first axial position (P1) of the input shaft (110; 610) relative to the casing (100) defining a first speed ratio of the transmission module (10), which input assembly (120, 122; 620, 622) includes a central through-bore (123; 623), said through-bore (123; 623) and the input shaft (110; 610) carrying complementary splines (124, 111; 624, 691) for coupling the input shaft with the input assembly, the input shaft (110; 610) being slidably mounted (102; 602) relative to the casing (100; 600), sliding in the through-bore (123; 623) to couple with the output assembly (130, 140; 630, 640) in a second position (P2) of the input shaft (110; 610) relative to the casing (100; 600), different from the first position (P1) by an axial translation (T2), wherein said complementary splines (124, 111; 624, 691) are no longer engaged, and which defines a second speed ratio of the transmission module (10), **characterized in that** the output assembly (130, 140; 630, 640) comprises a bored gear (130; 630) coupled to the input assembly (120, 122; 620, 622) by an external toothing (132; 632) and a central driver (140; 640), mounted relative to each other with an axial sliding connection, the driver (140; 640) including abutment means (145; 645) to support an axial thrust in one direction by a control rod (170; 670) and to support an axial thrust by the input shaft (110; 610) in the other direction, and splines (147, 647) for coupling and decoupling relative to an output (160; 660) of the transmission module (10), a spring (150; 650) being positioned so as to oppose the sliding of the driver (140; 640) relative to the bored gear (130; 630) when the input shaft (110; 610) displaces relative to the output assembly (130, 140; 630, 640).

2. The mechanical power transmission module (10) according to claim 1, **characterized in that** said input assembly (120, 122; 620, 622) constitutes the planet carrier (120; 620) of the planetary gear train equipped with its planet gears (122; 622), coupled without reduction to the input shaft (110; 610) in the first position (P1), the through-bore (123; 623) being a bore of the planet carrier (120; 620).

3. The mechanical power transmission module (10) according to claim 1 or 2, **characterized in that** the abutment means are constituted of a wall (145; 645) transverse to the axis of the power transmission module (10), possibly carrying a spacer (699) sliding axially according to a travel limited in both directions.

4. The mechanical power transmission module according to one of claims 1 to 3, **characterized in that** a leaf spring (180) of the transmission module is present between the input assembly (120, 122; 620, 622) and a bearing (121) linking the input shaft (110; 610) and the casing (100; 600), retains the shaft despite the weight thereof, and cooperates with a shape carried by the input shaft (110; 610) to indicate to an operator axially displacing the input shaft (110; 610) that it has reached the first or the second position.

5. The mechanical power transmission module according to one of claims 1 to 4, **characterized in that** the input shaft (110; 610) in the first position (P1) is less inserted into the casing (100; 600) than in the second position (P2).

6. A use of a mechanical power transmission module (10) according to one of claims 1 to 5, for the initial commissioning of an electric servomotor on a valve or gate valve for controlling a fluid flowing in a pipeline, or for a safety maneuver on said valve, the valve or gate valve being maneuvered by means of a transmission shaft carrying a wheel (3), the input shaft (110; 610) being coupled to a handwheel (1) constituting a manual control, the output assembly (130, 140; 630, 640) being coupled to a worm (4) which meshes with the wheel (3).
